# EUROPEAN PATENT SPECIFICATION

(11) **EP 1 198 792 B1**
(45) Date of publication and mention of the grant of the patent: **25.05.2005**
(21) Application number: 00946633.5
(22) Date of filing: 22.06.2000
(51) Int. Cl.: G08G 1/0969, G01C 21/20

(54) **MAP SERVICE**
KARTENDIENST
SERVICE CARTOGRAPHIQUE

(30) Priority: 24.06.1999 SE 9902417
(43) Date of publication of application: 24.04.2002
(73) Proprietor: TELIA AB, 123 86 Farsta (SE)
(72) Inventor: CHRISTIANSSON, Jonas, S-973 33 Lule (SE); ISAKSSON, Lars- ke, S-954 35 Gammelstad (SE); KERO, Roland, S-972 38 Lulea (SE); MELANDER, Henrik, S-943 33 Öjebyn (SE); PARASNIS, Amalendu, S-972 53 Lule (SE); ROSELL, Peter, S-431 38 Mölndal (SE); SIKSTRÖM, Andreas, S-974 51 Lule (SE)
(74) Representative: Hopfgarten, Nils
(86) International application number: PCT/SE2000/001338
(87) International publication number: WO 2001/001370

(56) References cited:
- EP-A1- 0 933 616
- EP-A2- 0 838 663
- EP-A2- 0 935 227
- EP-A2- 0 943 894
- EP-A2- 0 943 895
- US-A- 5 543 789

## Description

### Technical field

The present invention relates to a method, which, at a wireless communications system, makes possible that map information can be generated in a service server and be transmitted to the display unit at a mobile client or user terminal, where the map gradually is built up depending on the client's geographical position and movement. The map information is transmitted to the client as an amount of separate objects, map segments, in an efficient and bandwidth saving way, and district map is gradually built up on the display unit.

### Prior art

It is well known to transmit maps via radio or cable connection. At present there are no known services that make it practically feasible to transmit maps to mobile clients.

### Technical problem

Wireless communication always implies that the bandwidth is limited. This is a problem when larger amounts of data shall be transmitted and the bandwidth is small. If information shall be transmitted via mobile telephone networks, such as GSM, this results in problems depending on the limited bandwidth of the media. This has resulted in that maps, which normally include large amounts of data, have not been transmitted via such communication.

At travels, information is often needed about the position, and often also map information for planning of route. To directly get access to such information while travelling, one is obliged to use mobile communication, often mobile telephony, and consequently transmission of maps is a bottleneck.

Two-way communication means that the client requests a map image, and a map database responds by transmitting an image of a map. This results in an extensive communication with questions and answers for each transmitted map segment, and by that a high load on the transmission media.

At reception of a map the whole map is shown only when the whole image of the map has been transmitted. By that it will take long time before the user will get any information from the map.

Transmission of map segments is made in the order they have been stored in the database. This results in that the client has no possibility to prioritise the transmission to get a quicker access to the map segments of greatest importance or those most up-to-date.

### Technical solution

This invention shows how map information is generated in an intelligent way to make it possible to be distributed to a client where the map gradually is built up, adapted to the client's position and movement. The map information is transmitted continuously, efficient and adapted to the client to utilise the limited bandwidth that is available.

From the client the following information is transmitted to the server:
- the client's position
- the district for which map is wanted
- the client's speed vector
- information about which map segments that are stored in the client.

The method implies that a map over a whole district can be transmitted to the client as an amount of separate, small map images, but initiated by only one call to the service server. The vector of objects, i.e. map segments, which has been created by the algorithm in the map database is converted to a data stream, for instance by means of standard functions in the program language Java. Data in the stream then can be condensed by a suitable condensation algorithm, such as zip, and be transmitted to the client.

The client unpacks the stream in real time and extracts the map segments (objects), which are shown as they arrive. By this method is made possible rapid load of map also by TCP/IP over GSM.

By the map being packed in a stream, the client only needs to make one request for each map, but yet can receive the map segments and unpack them and show them on the client's display unit as they are arriving.

By the method, the traditional structure that characterises the traffic on Internet is avoided, with "request-response" for each transmitted object (map segment). This means, in addition to saved time and load in servers, also that the limited bandwidth is not loaded with unnecessary traffic. In order to further maximise the transmission speed of map data, data that are transmitted are condensed.

A technical embodiment of a system for the invention includes terminal/client, a map database and a service node in the form of a server. The terminal contains positioning system (for instance GPS) and data communication functions (possibly mobile).

### Advantages

A mathematical model controls in which order the map segments are transmitted to the client equipment. By that, it is easy to change this control mechanism, by changing the mathematical model. The invention in this way can easily be adapted to different needs and possibilities, and also easily follow the technical development and utilise new improved mathematical models.

According to the invention, two-way communication is utilised, so that the client requests that a map segment shall be transmitted, and supplies rules for the transmission in form of information, which controls the mathematical algorithm such as position, speed, direction and RTT (Round Trip Time). After that, transmission of a series of map segments starts. The transmission by that has the character of: "1 request → a lot of response packets".

The client equipment receives and handles the map segments and unpacks them as they are arriving. The map image is in that way gradually built up in the client equipment as map segments are received.

By the two-way communication, the terminal can control which map segments that shall be transmitted. This control is achieved by the terminal transmitting a vector, which contains information about the identity of the segments that are already stored in the client. Map segments that are already stored in the client equipment need by that not be transmitted again.

The scale of the map can be flexible.

In order to limit transmitted amount of data, a condensation algorithm is utilised. The condensation algorithm is exchangeable - any condensation can be used.

The invention includes several means to make possible fast transmission of map images on a medium with limited bandwidth:
- The client can control which map segments that shall be transmitted, and in which order they shall be transmitted.
- The map segments are unpacked as they are arriving to the client, so that the map image is growing on the display unit of the client equipment.
- One request for transmission results in transmission of a lot of map segments.
- The scale of the transmitted segments can be adjusted to optimally utilise bandwidth, and at the same time give the user the information that is required.

A solution according to the invention is technically easy to handle since:
- Only standard components are needed for the user equipment (GPS-receiver or receiver for other positioning system, ordinary computer and access possibility to Internet or a corresponding computer network via, for instance, GSM).
- The service is easy to use - load a program and the service is accessible.
- All included units communicate via an open computer network such as Internet by a universally accessible protocol such as TCP/IP, which makes it easy to distribute the system.
- By the utilisation of an open computer network it is easy to rescale the system for fewer or more users, and to extend the system with different geographical districts as market and need are changed.
- Operation, maintenance and further development of the service is facilitated by upgrading/updating and other changes only needing to be made in one place.

### List of figures

Figure 1 shows the whole map image that is in the map database, and the cut district, for which the client has requested a map.

Figure 2 shows how the cutting of the requested district is divided into objects, map segments.

Figure 3 shows sorting of map segments that are transmitted to the client if the user is walking or moving slowly.

Figure 4 shows sorting of map segments that are transmitted to the client if the user is moving with higher speed, for instance travelling by car.

### Explanation of terms

- GPS: Global Positioning System.
- GSM: Global System for Mobile Communication. Cellular mobile telephone system.
- RTT: Round Trip Time. The time from that a request has been transmitted to the service logic, until its wanted information has been received.
- IP: Internet Protocol. Protocol that is used in Internet.
- TCP: Transport Communication Protocol.
- ISP: Internet Service Provider. Internet provider.

### DETAILED DESCRIPTION

The description below refers to the figures in the enclosed drawings.

### Structure

The present invention describes the information service, suitably built up as a client/server solution. The invention can constitute a map support directly adapted to the user's utilisation, or constitute a part of an information service where a service provider, for instance an ISP, offers a service where map information is a part. To each service server a multiple of clients can be connected, which makes the system scalable. The clients are connected to the service server and all communication is passing via this service server, which in its turn is connected to a map database.

The client's position, which is needed for showing the right district map to the user, is obtained by means of a positioning system, for instance GPS, but the position can alternatively be entered manually.

All communication can be executed by means of TCP/IP, which is used on Internet. This means that the parts need not be on the same physical place, and that it is easy to connect a client to the service server.

### Transmission of map

According to the invention, a map is transmitted of a whole district as separate, small map segments, but by only one call to the service server. The vector of objects, i.e. map segments, which is created by the algorithm in the map database, is converted into a "data stream" by means of standard functions in the program language Java. Data in the stream are condensed by means of a suitable algorithm (for instance zip) and the condensed stream is then transmitted over TCP/IP to the client.

The client unpacks the stream in real time and extracts the objects (map segments) and shows them on the display as they are arriving. By this method fast loading of map is made possible also by TCP/IP over GSM.

By the map being packed in a data stream, the client only need to make one request for each map, but yet can receive a suit of map segments.

The terminal transmits, at request for transmission of map, en vector that informs about which segments that are already stored in the client. This vector contains the identity of stored map segments.

By the two-way communication, the terminal in this way can control which map segments that shall be transmitted. Map segments that are already stored in the client equipment by that need not to be transmitted again.

### Map database

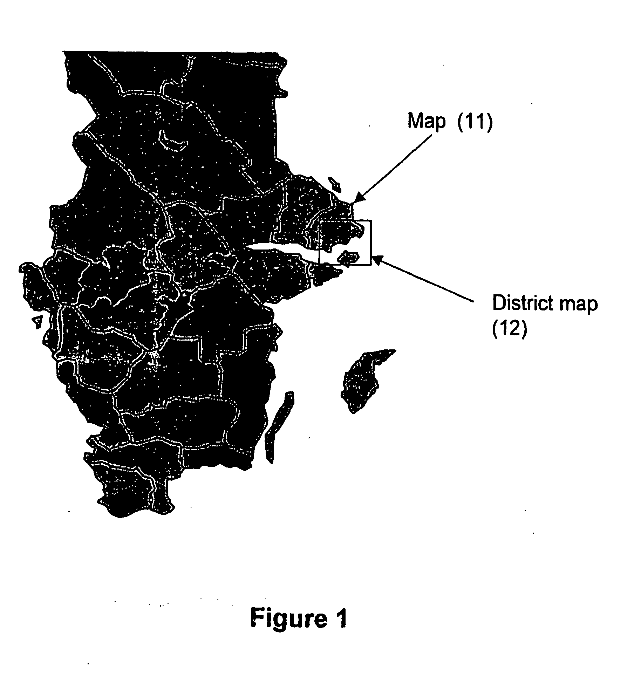

The map database contains a number of large images over larger districts (11) such as Stockholm, Luleå, Gotland etc. In the map database, which can be for instance bitmapped maps or vector based maps, is analysed which district the client wants, and the whole map image, which contains the district of which the client has requested a map, is derived. From this whole map image the map district (12) that corresponds to the district the client has requested is cut, see Figure 1.

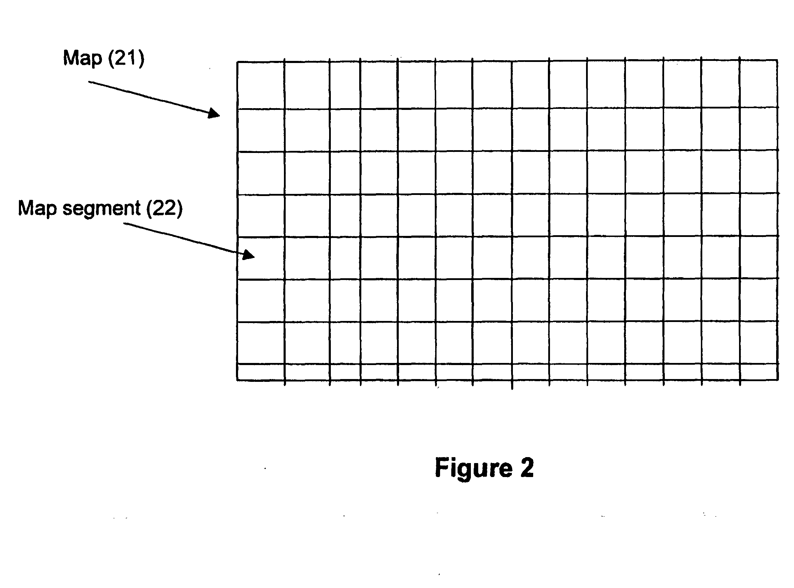

The map database divides the cutting in objects (i.e. map segments) comprising for instance 100*100 pixels at bitmapped maps. See Figure 2.

The map database sorts the objects (map segments) in a specific order, based on in which order the map segments shall be shown on the client's window. The sorting is primarily based on:
- the client's position,
- the client's movement; both direction and speed,
- RTT, (Round Trip Time), i.e. the time it will take from that the client has requested a map, until the map has arrived at the client.

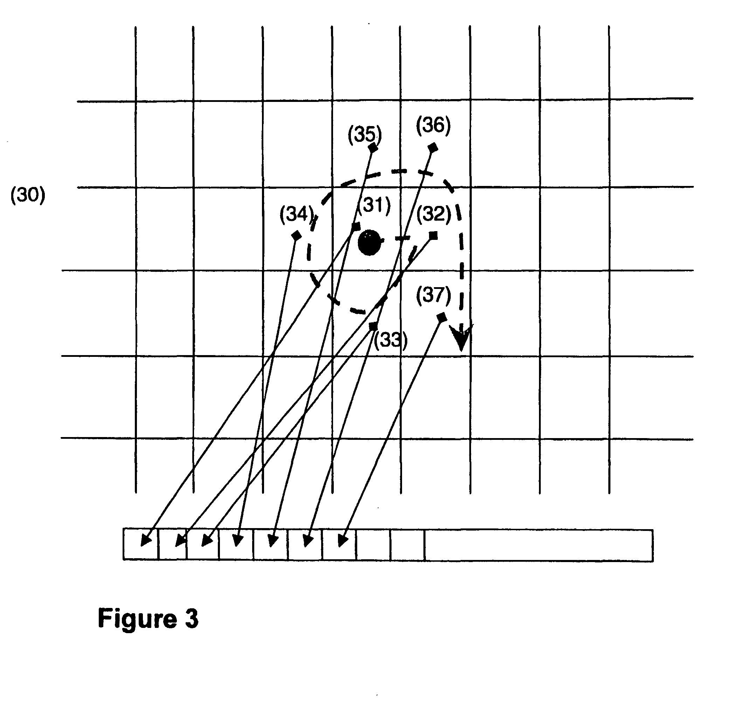

Normally, the map segment where the client is, is sorted as first object. After that, the objects are arranged in an order so that the map segments build up the whole requested map district round the user. This sorting method is used if the client has low speed, for instance if it is used by a walking person, see Figure 3. Map segment 31 in Figure 3 contains the client's position.

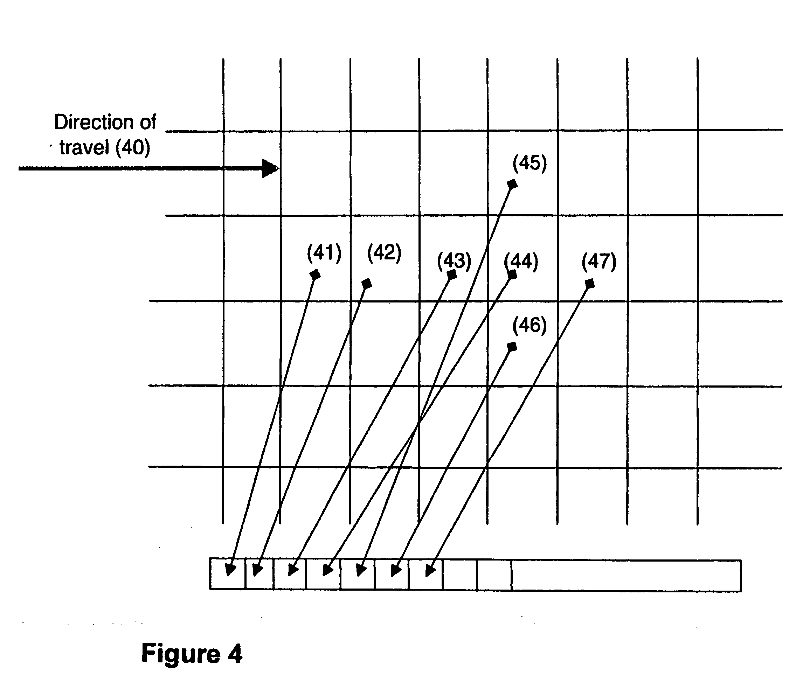

If the user is moving fast, the objects (map segments) can be sorted in an order that is controlled by the client's speed (incl. direction). If the client is used in a car, the map segments are sorted so that they are unpacked in the direction of travel first, and after that are other map segments shown on the client's screen, see Figure 4. Map segment 41 in Figure 4 contained the client's position at request for transmission of the map.

The objects (i.e. the map segments) are put together in wanted order in a vector that contains all map segments. The vector is then transmitted to the client, where the map is built up, bit by bit, in the order that is wanted. The map is tailored and adapted to the conditions that apply to the client.

According to the invention, the map image is built up gradually on the display unit of the user's terminal in best way with regard to the user's position, speed, direction and round-trip-time.

### Client application

The user is equipped with a terminal (client computer, for instance an ordinary, portable computer) with functionality for positioning (for instance GPS), operative system, as well as access to Internet, for instance via a telephone, preferably mobile telephone, for instance GSM.

Necessary software for the positioning system shall be in operation at the client computer. The software can easily be taken into operation for instance by loading via Internet from the service provider's website and subsequent installation.

The user sets up a fixed or dynamic connection to Internet by his/her Internet-provider. The client software reads the position from the GPS-receiver and transmits the position to the service server for map management, which derives the right map image from the map database in suitable picture coding format, for instance GIF-format, and transmits it to the client. The client software continuously indicates the user's position on the map, for instance 1 time/second.

When the user is approaching the edge of the map image, the client transmits a new corrected position to the service server, which sends the next map image, on which the user's position then is indicated.

All map segments that have been received in the client are stored locally until the program is finished, or the allocated space for maps is full. Request for transmission of map contains a vector with information about which map segments that are stored in the client. Transmission of the map segments that are already stored locally then will be suppressed. By this procedure, deriving of map is essentially accelerated if the user returns into a previously visited district.

The client transmits requests to the service server containing important parameters to make possible correct delivery and optimisation of transmission of map images. In request for transmission of map is included: Position, speed, direction, RTT (Round-Trip-Time), size of map, and information about which map segments that are stored in the client's memory. New request for map and information objects are transmitted when the user is approaching the edge of the already loaded map.

Exactly when a request is transmitted is decided by the client by means of RTT combined with speed and direction. In this way the client can pro-actively make requests to secure that map and other information is loaded in time for a district the client is on his/her way into.

The user can manage parts of his/her personal profile directly via the client application, which is then transmitted and stored in the service logic. The advantage of this, instead of storing the profile locally, is that the user can use just any mobile terminal with the client program installed and yet have access to his/her personal profile.

### Scenarios

As traveller in foreign places one often needs a map to find the place to which one wants to go. The traveller will have an up-to-date map of the district where he/she is.

When at sea it is safe to have a good and up-to-date nautical chart over the zone where one is sailing. If the map database is utilised, the seafarer never need to ponder about whether the nautical chart is old or not.

A haulage contractor can get the commission to deliver goods to different places where it can be difficult to find one's way even with good knowledge of the locality. I can be worth a lot to, in a simple way, show the customer's address and description of route in form of access to a map. To the haulage contractor it is a question of delivering the goods quickly, and then it is important to have access to a map that is up-to-date. It is also of great value always to have a map available at transports to different places.

Because the map image can be updated continuously, it is possible that police and the authority that is responsible for the road also utilises this means to distribute acute information about road conditions, closed roads, or other conditions that influence accessibility and risks. This can be of special value in connection with heavy transports in districts where the road conditions can vary, for instance during the breaking up of the frost in the ground.

### ALTERNATIVE EMBODIMENTS

The invention is not limited to the above described embodiments, but can, in addition to that, be subject to modifications within the frame of the following patent claims and the idea of invention.

### Adaptation

The downloading of the map can be controlled by shown route, selected route, and changes in selected route by adaptive selection of map segment and of scale. The algorithm for priority at transmission of map segment then will take into consideration the route the traveller has selected, or the route according to the map image that is in the map database. By that, the client's future changes of direction can be taken into consideration. Map segments can also be transmitted to the client for a planned route.

Intelligent agents, which have possibility to predict the user's actions, can, by supplying input data to the algorithm for priority at transmission of map segments, in different ways prepare, facilitate and improve transmission of map segments.

The unpacking of the received packets in the client equipment is made as the packets are received. The packets consequently are unpacked each, before the whole sequence of map segments has been received. In that way the image will gradually be built up in the client equipment. With a good algorithm, the user will see a map image gradually appear on the display unit in such a way that the districts that are most important will be shown first. At travel by car, for instance, map segments in the direction of travel will be shown first, see Figure 4.

### Flexible scale

The presentation/showing on the client can be independent of transmitted scale, so that map segments that have been transmitted in small scale are enlarged. The content of details will be lower in map segments that have been transmitted in a small scale, but on the other hand, the transmission will be faster, so that the user quickly will have an overview.

Different scales, or levels of detailed presentation, can be used in the database for different parts of the map, depending on need of level of detailed presentation.

Transmitted map segments can be transmitted with different scales or levels of detailed presentation, so that closely located map segments show a larger amount of details than map segments that are farther away.

The scale of the map can be flexible, so that the user can get an overview over a larger district, at the same time as he/she can see details in the neighbourhood of position of current interest.

The user can request different scales for different parts, depending on need.

The scale can be related to available transmission capacity and speed. At poor transmission capacity, or at rapid movement, the level of detailed presentation can be reduced.

### Alternative positioning

The user can request showing of a map over another district than where he/she is. By providing position information, the user can get a map image for, for instance, planning of a journey.

### Infrastructure and alternatives

Other computer networks than Internet can be utilised and the communication of the terminal can pass via GSM or other communication network.

The positioning/position indication can be made by GPS, other positioning system, or by manual position indication.

The invention is applicable to both vector maps and bitmapped maps, or maps that are utilising other technology.

## Claims

1. A method to, at request from a client, transmit map information from a service server to a display unit at said client via a communications system, at which the map information is generated in said service server and transmitted via said communications system to said display unit depending on an indicated geographical position, **characterised in that** said map information consists of a district map, which is transmitted to the client as an amount of separate objects, map segments, at which said district map is gradually built up on said display unit.

2. A method as claimed in patent claim 1,
**characterised in that** the transmission is made by means of utilisation of a universally accessible protocol, for instance the TCP/IP-protocol and via two-way communication, for instance in an open computer network such as Internet, and that the client communicates via mobile or fixed communication.

3. A method as claimed in patent claim 1 or 2,
**characterised in that** said amount of separate map segments are converted into a data stream, for instance by means of standard functions in the program language Java, and that data in the data stream are condensed by means of a condensation algorithm, for instance zip.

4. A method as claimed in any of the previous patent claims, **characterised in that** said transmission of district map is initiated by only one call to said service server.

5. A method as claimed in any of the previous patent claims, **characterised in that** said indicated geographical position is the client's position, and that the client's position is entered manually, or decided by a positioning system, for instance GPS.

6. A method as claimed in any of the previous patent claims, **characterised in that** the order in which the map segments are transmitted to the client is optimised by a mathematical model, and that said mathematical model is exchangeable.

7. A method as claimed in patent claim 6,
**characterised in that** said optimisation of the order in which the map segments are transmitted to the client equipment is based on information that are transmitted to the service server from client, such as said indicated position, the district for which map is wanted, the client's speed and direction, and the time from that said request has been transmitted to the service logic, until wanted information has arrived.

8. A method as claimed in patent claim 6 or 7,
**characterised in that** said mathematical model arranges the segments in said transmission of district map with regard to route, according to the map image that is in the map database, the route the traveller has selected, and changes in selected route.

9. A method as claimed in any of patent claims 6 to 8,
**characterised in that** intelligent agents create input data to said mathematical model by predicting the user's need and behaviour.

10. A method as claimed in any of patent claims 6 to 9,
**characterised in that** the client transmits a new, corrected request for transmission of map information to the service server if the client's speed or direction is changed, and when the user is approaching the limit of the geographical district that is covered by said district map, at which the service server starts transmitting a new district map and that point of time for transmission of said corrected position is decided by means of the client's speed, direction and the time from that a request has been transmitted to the service logic, until wanted information can be shown on said display unit.

11. A method as claimed in any of the previous patent claims, **characterised in that** the client receives, handles, unpacks and shows the map segments as they are arriving, so that said district map is gradually built up in said display unit, and that this unpacking and showing starts during said transmission of map segments.

12. A method as claimed in any of the previous patent claims, **characterised in that** all map segments, which have been received in the client, are stored locally in the client until the program is finished, or the allocated space for maps is full, that said request for transmission of district map includes a vector with information about which map segments that are stored in the client, and that transmission of the map segments that already are locally stored, is suppressed.

13. A method as claimed in any of the previous patent claims, **characterised in that**
• map segments, which have been transmitted in small scale, are enlarged at showing on the display unit of the client equipment
• different parts of the map is stored in the map database with the same, or different, level of detailed presentation
• map segments are transmitted in different scales, or with different levels of detailed presentation, so that closely located or important map segments have a more abundance of details than map segments of less importance.
• scale, or level of detailed presentation, is related to speed and supply of transmission capacity so that, for instance, fewer details are shown if the client's speed is high.

## Patentansprüche

1. Verfahren zur Übertragung von Landkarteninformation,
auf Anfrage eines Clients, von einem Service-Server zu einer Display-Einheit bei dem Client über ein Kommunikationssystem, bei dem die Landkarteninformation in dem Service-Server erzeugt und über das Kommunikationssystem zu der Display-Einheit in Abhängigkeit von einer angezeigten geographischen Position übertragen wird, **dadurch gekennzeichnet, dass** die Landkarteninformation aus einer Gebietslandkarte besteht, die als eine Menge von separaten Objekten, Landkartensegmenten, an den Client übertragen wird, bei dem die Gebietslandkarte schrittweise auf der Display-Einheit aufgebaut wird.

2. Verfahren gemäß Patentanspruch 1,
**dadurch gekennzeichnet, dass** die Übertragung mittels Verwendung eines allgemein zugänglichen Protokolls, zum Beispiel des TCP/IP-Protokolls, und über Zwei-Wege-Kommunikation erfolgt, zum Beispiel in einem offenen Computernetz wie dem Internet, und dass der Client über mobile oder feste Kommunikation kommuniziert.

3. Verfahren gemäß Patentanspruch 1 oder 2,
**dadurch gekennzeichnet, dass** die Menge separater Landkartensegmente in einen Datenstrom konvertiert wird, zum Beispiel mittels Standardfunktionen in der Programmsprache Java, und dass Daten in dem Datenstrom mittels eines Kompressions-Algorithmus, beispielsweise ZIP, komprimiert werden.

4. Verfahren gemäß einem der vorangehenden Patentansprüche, **dadurch gekennzeichnet, dass** die Übertragung einer Gebietslandkarte durch nur einen einzigen Aufruf an den Service-Server initiiert wird.

5. Verfahren gemäß einem der vorangehenden Patentansprüche, **dadurch gekennzeichnet, dass** die angezeigte geographische Position die Position des Clients ist und dass die Position des Clients manuell eingegeben wird oder durch ein Positionsbestimmungssystem, beispielsweise GPS, bestimmt wird.

6. Verfahren gemäß einem der vorangehenden Patentansprüche, **dadurch gekennzeichnet, dass** die Reihenfolge, in der die Landkartensegmente an den Client übertragen werden, durch ein mathematisches Modell optimiert wird und dass das mathematische Modell austauschbar ist.

7. Verfahren gemäß Patentanspruch 6,
**dadurch gekennzeichnet, dass** die Optimierung der Reihenfolge, in der die Landkartensegmente an die Client-Ausstattung übertragen werden, auf Information beruht, die vom Client an den Service-Server übertragen wird, wie z. B. die angezeigte Position, das Gebiet, für das die Landkarte gewünscht wird, die Geschwindigkeit und die Richtung des Clients und die Zeit von der Übertragung der Anfrage an die Service-Logik bis zum Eintreffen der gewünschten Information.

8. Verfahren gemäß Patentanspruch 6 oder 7,
**dadurch gekennzeichnet, dass** das mathematische Modell die Segmente in der Übertragung einer Gebietslandkarte im Hinblick auf die Route, gemäß dem Landkartenbild, das sich in der Landkarten-Datenbank befindet, der Route, die der Reisende gewählt hat, und Änderungen der gewählten Route anordnet.

9. Verfahren gemäß einem der Patentansprüche 6 bis 8,
**dadurch gekennzeichnet, dass** intelligente A-genten Eingabedaten für das mathematische Modell erzeugen, indem sie den Bedarf und das Verhalten des Benutzers voraussagen.

10. Verfahren gemäß einem der Patentansprüche 6 bis 9,
**dadurch gekennzeichnet, dass** der Client eine neue, korrigierte Anfrage auf Übertragung von Landkarteninformation an den Service-Server überträgt, wenn die Geschwindigkeit oder die Richtung des Clients verändert ist oder wird und wenn sich der Anwender der Grenze des geographischen Gebiets nähert, das durch die Gebietslandkarte abgedeckt ist, worauf der Service-Server beginnt, eine neue Gebietslandkarte zu übertragen, und dass der Zeitpunkt für Übertragung der korrigierten Position bestimmt wird mittels der Geschwindigkeit und Richtung des Clients und der Zeit, von der an eine Anfrage an die Service-Logik übertragen worden ist, bis die gewünschte Information auf der Display-Einheit angezeigt werden kann.

11. Verfahren gemäß einem der vorangehenden Patentansprüche, **dadurch gekennzeichnet, dass** der Client die Landkartensegmente wie sie ankommen empfängt, handhabt, auspackt und anzeigt, so dass die Gebietslandkarte schrittweise in der Display-Einheit aufgebaut wird, und dass dieses Auspacken und Anzeigen während der Übertragung der Landkartensegmente beginnt.

12. Verfahren gemäß einem der vorangehenden Patentansprüche, **dadurch gekennzeichnet, dass** alle Landkartensegmente, die in dem Client empfangen worden sind, lokal in dem Client gespeichert werden, bis das Programm beendet wird oder der für Landkarten vorgesehene Platz voll ist, dass die Anfrage auf Übertragung einer Gebietslandkarte einen Vektor mit Information darüber enthält, welche Landkartensegmente in dem Client gespeichert sind, und dass die Übertragung der Landkartensegmente, die bereits lokal gespeichert sind, unterdrückt wird.

13. Verfahren gemäß einem der vorangehenden Patentansprüche, **dadurch gekennzeichnet, dass**
• Landkartensegmente, die in kleinem Maßstab übertragen wurden, bei Anzeige auf der Display-Einheit der Client-Ausstattung vergrößert werden
• verschiedene Teile der Landkarte in der Landkarten-Datenbank mit dem selben oder einem anderen Niveau detaillierter Darstellung gespeichert werden
• Landkartensegmente mit unterschiedlichen Maßstäben oder mit unterschiedlichen Niveaus detaillierter Darstellung übertragen werden, so dass Landkartensegmente der nahen Umgebung oder wichtige Landkartensegmente eine größere Detailfülle aufweisen als weniger wichtige Landkartensegmente,
• der Maßstab oder das Niveau detaillierter Darstellung in Beziehung zu Geschwindigkeit und Versorgung mit Übertragungskapazität steht, so dass beispielsweise weniger Details angezeigt werden, wenn die Geschwindigkeit des Clients hoch ist.

## Revendications

1. Procédé pour transmettre, à la demande d'un client, des informations cartographiques d'un serveur de service à une unité d'affichage chez le dit client via un système de communication, dans lequel les informations cartographiques sont engendrées dans le dit serveur de service et transmises via le dit système de communication à la dite unité d'affichage en fonction d'une position géographique indiquée, **caractérisée en ce que** les dites informations cartographiques consistent en une carte de zone, qui est transmise au client comme une quantité d'objets séparés, ou segments de carte, de sorte que la dite carte de zone est progressivement construite sur la dite unité d'affichage.

2. Procédé selon la revendication 1, **caractérisé en ce que** la transmission est effectuée par l'utilisation d'un protocole universellement accessible, par exemple le protocole TCP/IP et via une communication bidirectionnelle, par exemple dans un réseau informatique ouvert tel que Internet, et **en ce que** le client communique via une communication mobile ou fixe.

3. Procédé selon la revendication 1 ou 2, **caractérisé en ce que** la dite quantité de segments de carte séparés sont convertis en un flux de données, par exemple au moyen de fonctions standard dans le langage de programme Java, et **en ce que** les données dans le flux de données sont condensées, au moyen d'un algorithme de condensation, par exemple ZIP.

4. Procédé selon une quelconque des revendications précédentes, **caractérisé en ce que** la dite transmission de carte de zone est déclenchée par un seul appel au dit serveur de service.

5. Procédé selon une quelconque des revendications précédentes, **caractérisé en ce que** la dite position géographique indiquée est la position du client, et **en ce que** la position du client est entrée manuellement ou établie par un système de positionnement, par exemple GPS.

6. Procédé selon une quelconque des revendications précédentes, **caractérisé en ce que** l'ordre dans lequel les segments de carte sont transmis au client est optimisé par un modèle mathématique, et **en ce que** le dit modèle mathématique est échangeable.

7. Procédé selon la revendication 6, **caractérisé en ce que** la dite optimisation de l'ordre dans lequel les segments de carte sont transmis à l'équipement du client est basée sur les informations qui sont transmises au serveur de service par le client, telles que la dite position indiquée, la zone pour laquelle la carte est désirée, la vitesse et la direction du client et le temps à partir de la transmission de la dite demande à la logique de service jusqu'à l'arrivée des informations désirées.

8. Procédé selon la revendication 6 ou 7, **caractérisé en ce que** le dit modèle mathématique arrange les segments dans la dite transmission de carte de zone en ce qui concerne la route, conformément à l'image de carte qui est dans la base de données de carte, le chemin que le voyageur a choisi, et les changements du chemin choisi.

9. Procédé selon une quelconque des revendications 6 à 8, **caractérisé en ce que** des agents intelligents créent les données d'entrée au dit modèle mathématique par prédiction des besoins et du comportement de l'utilisateur.

10. Procédé selon une quelconque des revendications 6 à 9, **caractérisé en ce que** le client transmet une nouvelle demande corrigée pour transmission d'informations cartographiques au serveur de service si la vitesse ou la direction du client est modifiée et lorsque l'utilisateur s'approche de la limite de la zone géographique qui est couverte par la dite carte de zone, de sorte que le serveur de service commence à transmettre une nouvelle carte de zone ; et **en ce que** l'instant de transmission de la dite position corrigée est décidé en fonction de la vitesse et de la direction du client et du temps à partir de la transmission d'une demande à la logique de service jusqu'à ce que les informations désirées puissent être représentées sur la dite unité d'affichage

11. Procédé selon une quelconque des revendications précédentes, **caractérisé en ce que** le client reçoit, traite, décondense et représente les segments de carte au fur et à mesure de leur arrivée, de sorte que la dite carte de zone est progressivement construite dans la dite unité d'affichage, et **en ce que** cette décondensation et cette représentation débutent pendant la dite transmission de segments de carte.

12. Procédé selon une quelconque des revendications précédentes, **caractérisé en ce que** tous les segments de carte, qui ont été reçus chez le client, sont stockés localement chez le client jusqu'à ce que le programme soit terminé ou que l'espace alloué pour les cartes soit plein, **en ce que** la dite demande de transmission d'une carte de zone comprend un vecteur avec des informations concernant les segments de carte qui sont stockés chez le client, et **en ce que** la transmission des segments de carte qui sont déjà stockés localement est supprimée.

13. Procédé selon une quelconque des revendications précédentes, **caractérisé en ce que**
les segments de carte, qui ont été transmis à petite échelle, sont agrandis lors de la représentation sur l'unité d'affichage de l'équipement du client,
différentes parties de la carte sont stockées dans la base de données de carte avec le même niveau ou un niveau différent de présentation détaillée,
les segments de carte sont transmis à des échelles différentes ou avec des niveaux différents de présentation détaillée, de sorte que les segments de carte très proches ou importants ont une plus grande abondance de détails que les segments de carte de moindre importance,
l'échelle, ou le niveau de présentation détaillé, est lié à la vitesse et à la fourniture du moyen de transmission, de sorte que, par exemple, moins de détails sont représentés si la vitesse du client est élevée.
